# EUROPEAN PATENT SPECIFICATION

(11) **EP 1 813 877 B1**
(45) Date of publication and mention of the grant of the patent: **01.06.2011**
(21) Application number: 06256301.0
(22) Date of filing: 11.12.2006
(51) Int. Cl.: F24F 1/00, F24F 13/22

(54) **Indoor unit of air conditioner**
Innenraumeinheit einer Klimaanlage
Unité intérieure d'un climatiseur

(30) Priority: 26.01.2006 KR 20060008348
(43) Date of publication of application: 01.08.2007
(73) Proprietor: LG Electronics, Inc., Seoul (KR)
(72) Inventor: Yang, Seung Hoon, Saha-gu Busan (KR)
(74) Representative: Palmer, Jonathan R.

(56) References cited:
- GB-A- 2 270 152
- JP-A- 1 194 285
- JP-A- 6 159 710
- JP-A- 2000 179 886
- JP-A- 2003 227 624

## Description

### Technical Field

The present invention relates to an indoor unit of an air conditioner, and more particularly, to an indoor unit of an air conditioner which is capable of more easily draining condensed water generated in a heat exchanger.

### Background Art

Generally, air conditioners have a heater, cooler or cleaner function to cool/heat a confined space such as a room or to clean air, and thus, to provide a more comfortable indoor environment to users. Recently, an air conditioner has been developed which includes a turbo fan capable of minimizing the thickness of an indoor unit cabinet of the air conditioner, and thus, allowing the cabinet to be mounted to a room wall, like a frame.

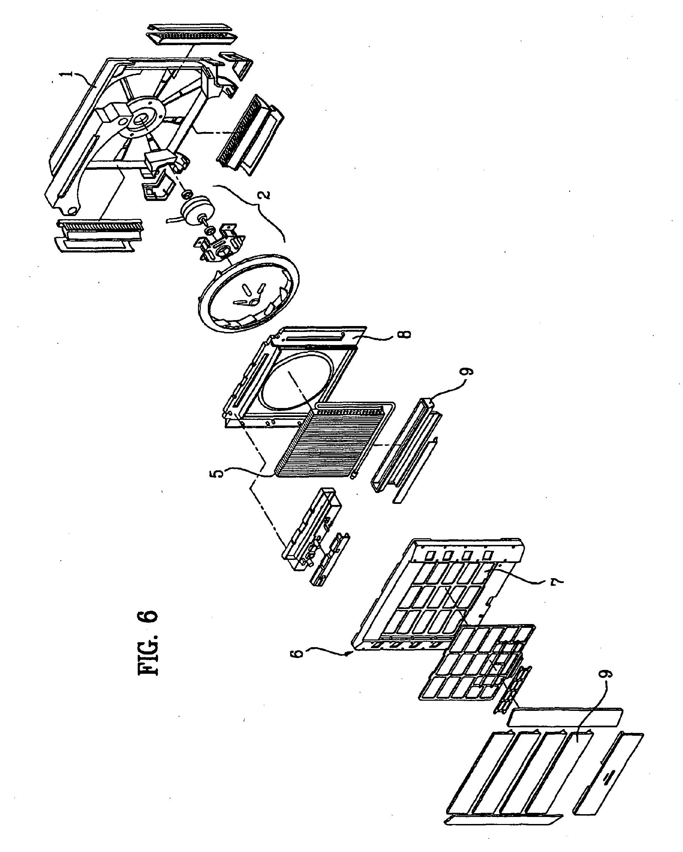

FIG. 6 is an exploded perspective view illustrating a conventional indoor unit included in a general air conditioner. Referring to FIG. 6, the conventional indoor unit includes a forwardly-open and thin rectangular cabinet 1, a blower 2 mounted in the cabinet 1, a heat exchanger 5 arranged in front of the blower 2, a front panel 6 arranged in front of the heat exchanger 5, and provided with an air inlet 7 for receiving air, and an orifice 8 arranged between the blower 2 and the front panel 6. A front grill 9 is mounted to a front surface of the front panel 6 such that blades of the front grill 9 are hingable through a certain angle with respect to the front surface of the front panel 6, to open or close the air inlet 7.

A drain pan 3 is arranged beneath the heat exchanger 5 arranged in the cabinet 1, to outwardly drain condensed water generated in the heat exchanger 5. The heat exchanger 5 performs a cooling/heating operation in accordance with heat exchange thereof with air introduced into the indoor unit through the front panel 6. During the heat exchange, condensed water is generated from the surface of the heat exchanger 5. The condensed water is dropped onto the drain pan 3, and is then outwardly drained through the drain pan 3.

In the conventional indoor unit having the above-mentioned configuration, however, there may be a problem because the lower end of the heat exchanger 5 is directly in contact with the inner bottom surface of the drain pan 3. That is, when the condensed water flows along the drain pan 3, the lower end of the heat exchanger 5 interferes with the condensed water flow, thereby preventing the condensed water from being smoothly drained. Furthermore, when the drainage of the condensed water is not smoothly carried out, the surface of the heat exchanger 5 may be frosted, thereby degrading the efficiency of the heat exchanger 5.

JP 06 159710 describes an air conditioner having a drain pan arranged below a heat exchanger with slime preventing material arranged on the front surface of the bottom of the drain pan to prevent slime forming on the drain pan.

### Summary of the Invention

It would be desirable to provide an indoor unit of an air conditioner which includes a drain pan capable of more smoothly draining condensed water generated in a heat exchanger.

Accordingly, the invention provides an indoor unit of an air conditioner as defined in claim 1.

The at least one rib may comprise a plurality of ribs extending vertically from on the inner surface of the bottom of the housing by a predetermined length. In accordance with this structure, the lower end of the heat exchanger is supported by the ribs while being spaced apart from the inner surface of the bottom of the housing by the predetermined length, to form a flow path.
Preferably, the ribs extend in a longitudinal direction of the housing. Also, the ribs may be arranged on the inner surface of the bottom of the housing in a zig-zag fashion.

The at least one outlet may comprise outlets respectively formed at opposite ends of the housing. In order more smoothly drain the condensed water, the inner surface of the bottom of the housing may be downwardly inclined toward the outlets in opposite directions, respectively. In this case, the ribs have upper ends extending in parallel, respectively, to support the heat exchanger in an upright state.

The housing may an upwardly-open hexahedral structure, and may have front and rear walls respectively having different heights such that the front wall is higher than the rear wall.

The front wall may be forwardly inclined, in order to more easily collect the condensed water.

Thus, in accordance with the present invention, it is possible to more easily and smoothly drain condensed water, generated from the heat exchanger, out of the indoor unit.

### Brief Description of Drawings

The accompanying drawings, which are included to provide a further understanding of the invention, illustrate embodiments of the invention and together with the description serve to explain the principle of the invention.

In the drawings:
FIG. 1 is an exploded perspective view illustrating an indoor unit of an air conditioner according to a preferred embodiment of the present invention;
FIG. 2 is a front perspective view illustrating a drain pan shown in FIG. 1;
FIG. 3 is a rear perspective view of the drain pan shown in FIG. 1;
FIG. 4 is a perspective view illustrating a state in which the lower end of a heat exchanger is inserted into the drain pan according to the illustrated embodiment of the present invention;
FIG. 5 is a cross-sectional view taken along the line V - V of FIG. 4; and
FIG. 6 is an exploded perspective view illustrating a conventional indoor unit included in a general air conditioner.

### Detailed Description

Reference will now be made in detail to the preferred embodiments of the present invention, examples of which are illustrated in the accompanying drawings. Wherever possible, the same reference numbers will be used throughout the drawings to refer to the same or like parts.

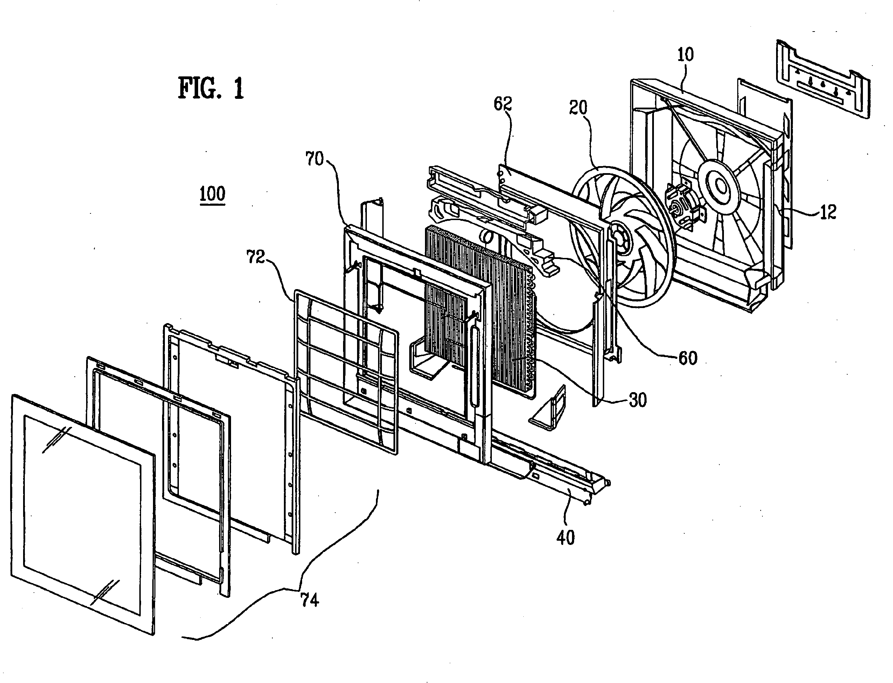

FIG. 1 is an exploded perspective view illustrating an indoor unit of an air conditioner according to a preferred embodiment of the present invention.

Referring to FIG. 1, the indoor unit 100 according to the preferred embodiment of the present invention includes a cabinet 10 defining the appearance of the indoor unit 100, a blower 20 mounted in the cabinet 10, a heat exchanger 30 mounted in the cabinet 10, to perform heat exchange with indoor air introduced from a room into the cabinet 10, and an air guide 60 for guiding air discharged from the blower 20.

A frame panel 74 is mounted to a front side of the cabinet 10 such that the frame panel 74 is spaced from a front panel 70 mounted to the front side of the cabinet 10, to define a gap. Through the gap, indoor air is introduced into the interior of the indoor unit 100. The introduced indoor air reaches the heat exchanger 30 after passing through a filter 72, and is then subjected to heat exchange performed by the heat exchanger 30. The indoor air emerging from the heat exchanger 30 passes through an orifice 62, and is then discharged into the room through an air outlet 12 of the cabinet 10 in accordance with operation of the blower 20.

Meanwhile, a drain pan 40 is arranged beneath the heat exchanger 30 which performs heat exchange with the indoor air. The drain pan 40 collects condensed water generated in the heat exchanger 30, and outwardly drains the collected condensed water. Hereinafter, the structure of the drain pan 40 according to a preferred embodiment of the present invention will be described in detail with reference to the annexed drawings.

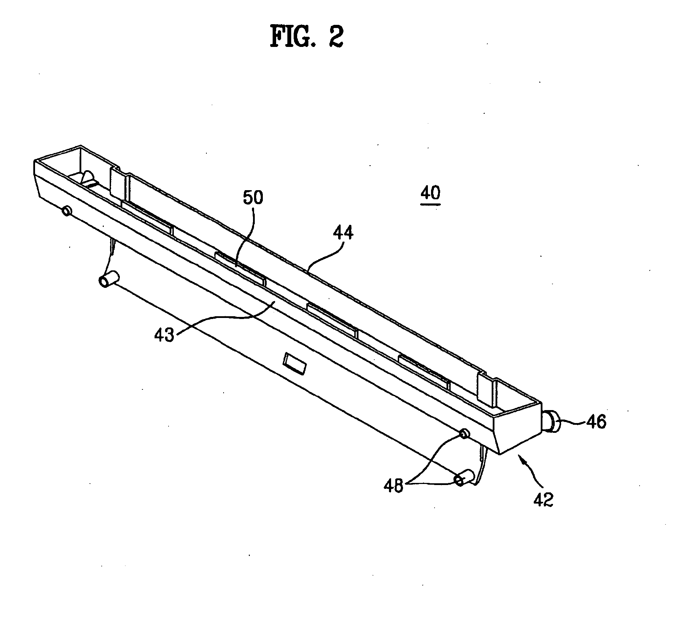

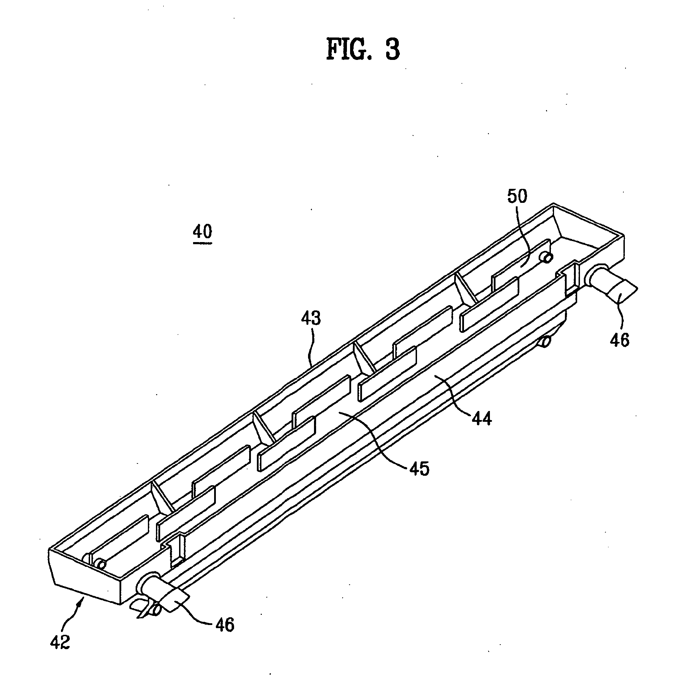

FIG. 2 is a front perspective view illustrating the drain pan 40 according to the preferred embodiment of the present invention. FIG. 3 is a rear perspective view of the drain pan 40.

Referring to FIGs. 2 and 3, the drain pan 40 includes an upwardly-open housing 42, and ribs 50 formed on an inner surface of the bottom 45 of the housing 42, to define a flow path of condensed water.

In detail, the housing 42 has an upwardly-open hexahedral structure. The housing 42 receives the lower end of the heat exchanger 30 (FIG. 1) through the open upper side of the housing 42. The housing 42 may have a front wall 43 higher than a rear wall 44. Here, the front wall 43 is a wall of the housing 42 arranged upstream in an introduction direction of the indoor air, as compared to other walls of the housing 42. When the front wall 43 is higher than the rear wall 44, the condensed water can smoothly flow along the interior of the housing 42 without being obstructed by a flow of air passing through the heat exchanger 30.

As shown in FIGs. 2 and 3, the front wall 43 is forwardly inclined by a certain angle. When the front wall 43 is forwardly inclined, the housing 42 has an increased cross-sectional area at the top of the housing 42, as compared to the cross-sectional area at the bottom 45 of the housing 42. By virtue of such an increased cross-sectional area at the top of the housing 42, it is possible to prevent the condensed water generated in the heat exchanger 30 from falling into a region other than the drain pan 40, and thus, to collect an increased amount of condensed water in the drain pan 40, as compared to conventional drain pans.

Meanwhile, at least one outlet 46 is provided at the housing 42, in order to outwardly drain the condensed water falling into the drain pan 40 after being generated in the heat exchanger 30. Preferably, a pair of outlets 46 are provided at opposite ends of the housing 42, in order to more smoothly drain the condensed water. An extension 47 is provided at an outer surface of the bottom 45 of the housing 42. Bosses 48 are formed at each of the housing 42 and extension 47. The housing 42 can be fixed to the front panel 70, using the boss 48.

The ribs 50 extend vertically from the inner surface of the bottom 45 of the housing 42. Each rib 50 also extends along the length of the housing 42 by a certain length such that the rib 50 has an elongated plate structure. In accordance with this structure, the ribs 50 firmly support the heat exchanger 30 while minimizing friction with the condensed water flowing along the bottom 45 of the housing 42.

The ribs 50 support the lower end of the heat exchanger 30 in the interior of the housing 42 such that the lower end of the heat exchanger 30 is prevented from coming into direct contact with the inner surface of the bottom 45 of the housing 42. That is, the lower end of the heat exchanger 30 is supported by the ribs 50 such that it is vertically spaced apart from the inner surface of the bottom 45 of the housing 42 by a certain distance. The gap defined between the lower end of the heat exchanger 30 and the bottom 45 of the housing 42 forms a flow path of the condensed water.

Preferably, the ribs 50 have a height smaller than those of the front wall 43 and rear wall 44 such that the lower end of the heat exchanger 30 is supported by the ribs 50 at a level lower than the upper ends of the front wall 43 and rear wall 44. Accordingly, it is also possible to support the heat exchanger 30 by the front wall 43 or rear wall 44.

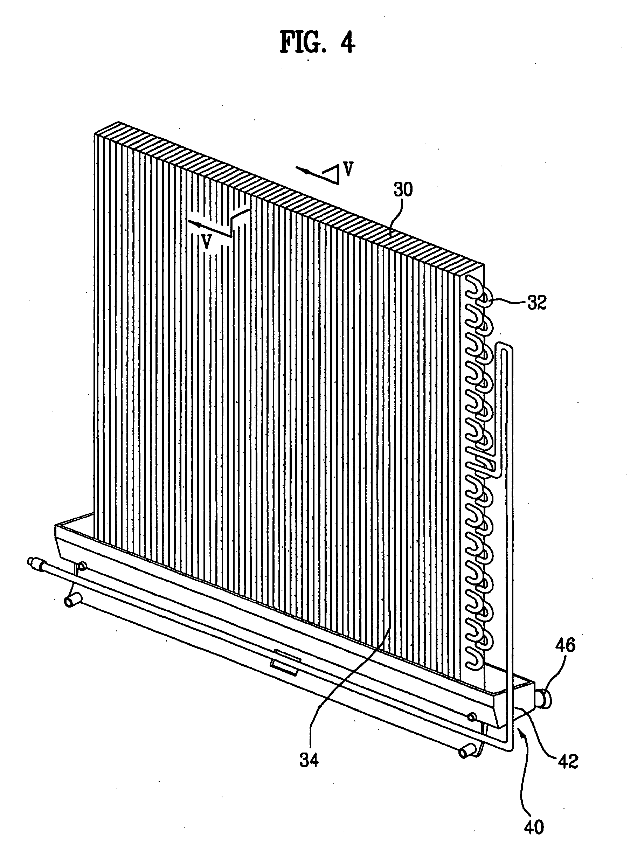

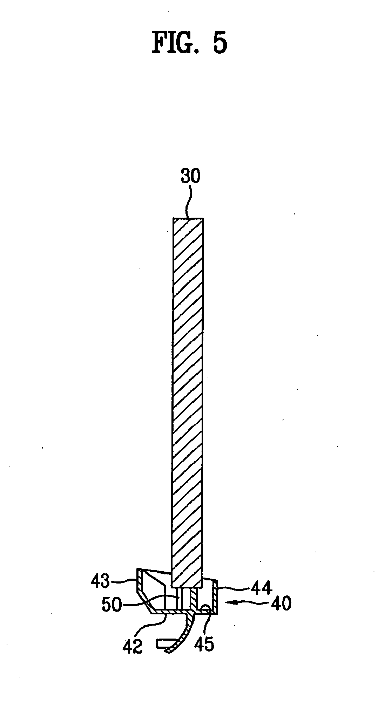

The flow path defined by the ribs 50 is illustrated in detail in FIGs. 4 and 5.

FIG. 4 is a perspective view illustrating a state in which the lower end of the heat exchanger 30 is inserted into the drain pan 40 according to the illustrated embodiment of the present invention. FIG. 5 is a cross-sectional view taken along the line V - V of FIG. 4.

Referring to FIG. 4, the lower end of the heat exchanger 30 is inserted into the housing 42 through the open top of the housing 42, and is then fixed to the housing 42. In detail, the heat exchanger 30 includes a pipe 32, through which a refrigerant flows, and cooling fins 34 formed on an outer surface of the pipe 32. The cooling fins 34 extend in a direction perpendicular to a longitudinal direction of the housing 42 such that they minimize resistance thereof to air passing through the heat exchanger 30. On the other hand, the ribs 50 extend in the longitudinal direction of the housing 42 by a considerable length, as described above, to increase the contact area thereof with the cooling fins 34, and thus, to more firmly support the heat exchanger 30.

Referring to FIG. 5, it can be seen that the lower end of the heat exchanger 30 is supported by the ribs 50 arranged in the housing 42 while being spaced apart from the inner surface of the bottom 45 of the housing 42 by a certain distance, to form a flow path of condensed water. By virtue of this flow path, the lower end of the heat exchanger 30 is prevented from coming into direct contact with the inner surface of the bottom 45 of the housing 42, so that the condensed water can more smoothly flow in the housing 42.

Meanwhile, since the front wall 43 of the housing 42 is higher than the rear wall 44 of the housing 42, as described above, it is possible to prevent the condensed water flow from being obstructed by the air flow. Also, since the front wall 43 is forwardly inclined, it is possible to prevent the condensed water generated in the heat exchanger 30 from falling into a region other than the drain pan 40.

Referring to FIGs. 2 and 3 again, the ribs 50 extend in the longitudinal direction of the housing 42 by a considerable length in the interior of the housing 42. The elongated ribs 50 not only firmly support the heat exchanger 30, but also guide the condensed water to flow toward the outlets 46. Meanwhile, the ribs 50 may be arranged on the bottom 45 of the housing 42 in a zig-zag fashion. When the ribs 50 are not arranged to be aligned together, but are arranged in a zig-zag fashion, the condensed water can more smoothly flow as the condensed water flows on the adjacent ribs 50 are mixed together.

Although not shown, the bottom 45 of the housing 42 is preferably downwardly inclined toward the outlets 46. Where only one outlet 46 is formed at one end of the housing 42, the bottom 45 of the housing 42 is downwardly inclined toward the outlet 46. In accordance with this inclination, the condensed water in the housing 42 can more smoothly flow along the bottom 45 of the housing 42 toward the outlet 46.

On the other hand, where a pair of outlets 46 are formed at the opposite ends of the housing 42, respectively, the bottom 45 of the housing 42 is downwardly inclined toward both the outlets 46. In this case, the bottom 45 of the housing 42 has portions downwardly inclined toward the outlets 46 at opposite sides of the central portion of the bottom 45, respectively.

Meanwhile, even when the bottom 45 of the housing 42 has a structure inclined toward the outlets 46, as described above, it is preferred that the upper ends of the ribs 50 formed on the bottom 45 of the housing 42 extend in parallel. That is, the upper ends of the ribs 50 extend in parallel irrespective of the inclination of the bottom 45 of the housing 42, in order to support the heat exchanger 30 in an upright state without causing inclination of the heat exchanger 30.

Hereinafter, a procedure for installing the drain pan 40 having the above-described structure will be described.

First, the operator mounts the drain pan 40 to the front panel 70. The mounting is achieved by fastening the bosses 48 formed at the front panel 70 and the bosses 48 formed at the housing 42 of the drain pan 40, using fastening members (not shown) such as bolts or screws.

Thereafter, the operator inserts the lower end of the heat exchanger 30 into the mounted housing 42 through the open top of the housing 42, and then mounts the heat exchanger 30 to the orifice 62 or front panel 70. In this state, the lower end of the heat exchanger 30 is supported by the ribs 50 formed in the housing 42. A gap is also defined between the lower end of the heat exchanger 30 and the bottom 45 of the housing 42, to form a flow path of condensed water. Thus, the installation or assembly procedure is completed.

Now, drainage of condensed water carried out during operation of the indoor unit will be described with reference to the annexed drawings.

When heat exchange occurs between the refrigerant and the indoor air in the heat exchanger 30 in accordance with operation of the indoor unit, condensed water is generated from the outer surface of the heat exchanger 30 due to a temperature difference between the heat exchanger 30 and the indoor air. The generated condensed water flows downwardly along the outer surface of the heat exchanger 30 to the drain pan 40 arranged beneath the heat exchanger 30. As a result, the condensed water is collected in the drain pan 40. During this procedure, the condensed water flowing downwardly from the heat exchanger 30 is prevented from falling to a region other than the drain pan 40 because the front wall 43 of the housing 42 is forwardly inclined. Thus, the condensed water can be easily and reliably collected.

The condensed water collected in the drain pan 40 flows along the flow path formed between the lower end of the heat exchanger 30 and the bottom 45 of the housing 42, and is then drained through the outlets 46 formed at respective ends of the housing 42. Where the ribs 50 are arranged on the bottom 45 in a zig-zag fashion, the condensed water can more smoothly flow. Also, where the bottom 45 of the housing 42 has a structure inclined toward the outlets 46, the condensed water can more easily flow toward the outlets 46.

It will be apparent to those skilled in the art that various modifications and variations can be made in the present invention without departing from the scope of the invention as defined by the appended claims. Thus, it is intended that the present invention cover the modifications and variations of this invention provided they come within the scope of the appended claims.

In accordance with the drain pan of the present invention, the ribs thereof formed on the bottom of the housing support the lower end of the heat exchanger, to prevent the lower end of the heat exchanger from coming into direct contact with the bottom of the housing. Accordingly, the condensed water discharged from the heat exchanger can smoothly flow along the bottom of the housing without being obstructed by the lower end of the heat exchanger.

In the drain pan of the present invention, the ribs have an elongated thin plate structure extending toward the condensed water outlet. Accordingly, it is possible to easily drain the condensed water.

In the drain pan of the present invention, the front wall of the housing is higher than the rear wall of the housing, and is forwardly inclined. Accordingly, it is possible to prevent the condensed water generated from the heat exchanger from falling to a region other than the drain pan.

## Claims

1. An indoor unit of an air conditioner comprising a heat exchanger (30), and a drain pan (40) arranged beneath the heat exchanger (30), to drain condensed water, wherein the drain pan comprises:
an upwardly-open housing (42) provided with at least one outlet (46) for draining the condensed water, the housing (42) receiving a lower end of the heat exchanger (30); and
at least one rib (50) formed in the housing (42), to support the heat exchanger (30), the rib defining a flow path of the condensed water between an inner surface of the bottom of the housing (42) and the lower end of the heat exchanger (30), the housing (42) having an upwardly open hexahedral structure; **characterized in that** the housing (42) has front and rear walls (43, 44) respectively having different heights such that the front-wall (43) is higher than the rear wall (44) in order to prevent the condensed water from being obstructed by an airflow.

2. The indoor unit according to claim 1, wherein the at least one rib (50) comprises a plurality of ribs extending vertically from on the inner surface of the bottom of the housing by a predetermined length, to space the lower end of the heat exchanger apart from the inner surface of the bottom of the housing by the predetermined length.

3. The indoor unit according to claim 2, wherein the ribs (50) extend in a longitudinal direction of the housing.

4. The indoor unit according to claim 2, wherein the ribs (50) are arranged on the inner surface of the bottom of the housing in a zig-zag fashion.

5. The indoor unit according to claim 2, wherein:
the at least one outlet comprises outlets respectively formed at opposite ends of the housing; and
the inner surface of the bottom of the housing is downwardly inclined toward the outlets in opposite directions, respectively.

6. The indoor unit according to claim 5, wherein the ribs have upper ends extending in parallel, respectively.

7. The indoor unit according to claim 1, wherein the front wall (43) is forwardly inclined.

## Patentansprüche

1. Innenraumeinheit einer Klimaanlage,
umfassend einen Wärmetauscher (30) und eine unterhalb des Wärmetauschers (30) angeordnete Ablaufwanne (40), um Kondenswasser abzulassen,
wobei die Ablaufwanne umfasst:
ein nach oben offenes Gehäuse (42), welches mit wenigstens einem Ablass (46) zum Ablassen des Kondenswassers vorgesehen ist, wobei das Gehäuse (42) ein unteres Ende des Wärmetauschers (30) aufnimmt; und
wenigstens eine Rippe (50), welche in dem Gehäuse (42) gebildet ist, um den Wärmetauscher (30) zu stützen, wobei die Rippe einen Fließweg des Kondenswassers zwischen einer Innenfläche des Bodens des Gehäuses (42) und dem unteren Ende des Wärmetauschers (30) definiert, wobei das Gehäuse (42) eine nach oben offene hexaedrische Struktur aufweist;
**dadurch gekennzeichnet,**
**dass** das Gehäuse (42) eine Vorder- und eine Rückwand (43, 44) aufweist, welche jeweils unterschiedliche Höhen derart aufweisen, dass die Vorderwand (43) höher als die Rückwand (44) ist, um zu verhindern, dass das Kondenswasser durch eine Luftströmung blockiert ist.

2. Innenraumeinheit nach Anspruch 1,
wobei die wenigstens eine Rippe (50) eine Mehrzahl von Rippen umfasst, welche sich von der Innenfläche des Bodens des Gehäuses um eine vorbestimmte Länge vertikal erstrecken, um das untere Ende des Wärmetauschers von der Innenfläche des Bodens des Gehäuses um eine vorbestimmte Länge zu beabstanden.

3. Innenraumeinheit nach Anspruch 2,
wobei die Rippen (50) sich in einer Längsrichtung des Gehäuses erstrecken.

4. Innenraumeinheit nach Anspruch 2,
wobei die Rippen (50) an der Innenfläche des Bodens des Gehäuses in einer Zickzack-Weise angeordnet sind.

5. Innenraumeinheit nach Anspruch 2,
wobei der wenigstens eine Ablass Ablässe umfasst, welche jeweils an entgegengesetzten Enden des Gehäuses gebildet sind; und
wobei die Innenfläche des Bodens des Gehäuses nach unten geneigt ist, in Richtung der jeweiligen Ablässe in entgegengesetzten Richtungen.

6. Innenraumeinheit nach Anspruch 5,
wobei die Rippen obere Enden aufweisen, die sich jeweils parallel erstrecken.

7. Innenraumeinheit nach Anspruch 1,
wobei die Vorderwand (43) nach vorne geneigt ist.

## Revendications

1. Unité interne d'un climatiseur comprenant un échangeur thermique (30), et un bac de drainage (40) agencé sous l'échangeur thermique (30), pour évacuer l'eau condensée, dans laquelle le bac de drainage comprend :
un logement (42) ouvert vers le haut doté d'au moins une sortie (46) pour évacuer l'eau condensée, le logement (42) recevant une extrémité inférieure de l'échangeur thermique (30) ; et
au moins une nervure (50) formée dans le logement (42), pour supporter l'échangeur thermique (30), la nervure définissant un chemin d'écoulement de l'eau condensée entre une surface interne de la partie inférieure du logement (42) et l'extrémité inférieure de l'échangeur thermique (30), le logement (42) ayant une structure d'hexaèdre ouverte vers le haut ; **caractérisée en ce que** le logement (42) a des parois avant et arrière (43, 44) ayant respectivement différentes hauteurs de sorte que la paroi avant (43) soit plus haute que la paroi arrière (44) afin d'éviter que l'eau condensée ne soit entravée par un flux d'air.

2. Unité interne selon la revendication 1, dans laquelle l'au moins une nervure (50) comprend une pluralité de nervures s'étendant verticalement de la surface interne du fond du logement sur une longueur prédéterminée, pour écarter l'extrémité inférieure de l'échangeur thermique de la surface interne du fond du logement par la longueur prédéterminée.

3. Unité interne selon la revendication 2, dans laquelle les nervures (50) s'étendent dans une direction longitudinale du logement.

4. Unité interne selon la revendication 2, dans laquelle les nervures (50) sont agencées en zigzag sur la surface interne du fond du logement.

5. Unité interne selon la revendication 2, dans laquelle :
l'au moins une sortie comporte des sorties respectivement formées à des extrémités opposées du logement ; et
la surface interne du fond du logement est inclinée vers le bas vers les sorties dans des directions opposées, respectivement.

6. Unité interne selon la revendication 5, dans laquelle les nervures ont respectivement des extrémités supérieures s'étendant en parallèle.

7. Unité interne selon la revendication 1, dans laquelle la paroi avant (43) est inclinée vers l'avant.
